# EUROPÄISCHE PATENTSCHRIFT

(11) **EP 3 978 882 B1**
(45) Veröffentlichungstag und Bekanntmachung des Hinweises auf die Patenterteilung: **06.09.2023**
(21) Anmeldenummer: 21197732.7
(22) Anmeldetag: 20.09.2021
(51) Int. Cl.: G01D 11/24

(54) **SENSORANORDNUNG FÜR EINE PRODUKTIONSEINRICHTUNG SOWIE VERFAHREN ZUM TRANSFERIEREN EINES SENSORS IN EIN GEHÄUSE EINER PRODUKTIONSEINRICHTUNG UND AUS EINEM GEHÄUSE EINER PRODUKTIONSEINRICHTUNG**
SENSOR ASSEMBLY FOR A PRODUCTION DEVICE AND METHOD FOR TRANSFERRING A SENSOR INTO A HOUSING OF A PRODUCTION DEVICE AND OUT OF A HOUSING OF A PRODUCTION DEVICE
AGENCEMENT DE CAPTEUR POUR UN DISPOSITIF DE PRODUCTION, AINSI QUE PROCÉDÉ DE TRANSFERT D'UN CAPTEUR VERS UN BOÎTIER D'UN DISPOSITIF DE PRODUCTION ET À PARTIR D'UN BOÎTIER D'UN DISPOSITIF DE PRODUCTION

(30) Priorität: 01.10.2020 DE 102020125653
(43) Veröffentlichungstag der Anmeldung: 06.04.2022
(73) Patentinhaber: Fette Compacting GmbH, 21493 Schwarzenbek (DE)
(72) Erfinder: Schöler, Martin, 20146 Hamburg (DE); Nehls, Benjamin, 23909 Giesensdorf (DE); Issmer, Marcel, 20537 Hamburg (DE)
(74) Vertreter: Hauck Patentanwaltspartnerschaft mbB

(56) Entgegenhaltungen:
- DE-A1-102005 060 676
- DE-A1-102016 202 315
- US-B2- 8 511 160

## Beschreibung

Die Erfindung betrifft eine Sensoranordnung für eine Produktionseinrichtung, umfassend einen Sensor, wobei der Sensor einen Aussende- und/oder Aufnahmeabschnitt zum Aussenden und/oder Aufnehmen von Sensorsignalen und einen Sensorabschnitt umfasst. Die Erfindung betrifft außerdem eine Produktionseinrichtung sowie Verfahren zum Transferieren eines Sensors in ein Gehäuse einer Produktionseinrichtung und aus einem Gehäuse einer Produktionseinrichtung.

Produktionseinrichtungen der hier in Rede stehenden Art können zum Beispiel Rundläufertablettenpressen, Kapselfüllmaschinen oder Isolatoren für Rundläufertablettenpressen oder Kapselfüllmaschinen sein. Beispielsweise in Rundläufertablettenpressen wird in Kavitäten einer Matrizenscheibe gefülltes Pulvermaterial mittels Ober- und Unterstempeln zu Tabletten verpresst. Die hergestellten Tabletten werden in der Regel durch die Unterstempel auf die Oberseite der Matrizenscheibe gefördert und beispielsweise von einem Abstreifelement von der Matrizenscheibe abgestreift und einem oder mehreren Auslässen der Rundläufertablettenpresse zugeführt.

Beispielsweise aus EP 1 568 480 B1 ist es bekannt, mit spektroskopischen Sensoren, zum Beispiel NIR-Sensoren (Nahinfrarot-Sensoren), in Rundläufertablettenpressen hergestellte Tabletten zu überwachen, zum Beispiel auf den Wirkstoffgehalt. Auch bekannt ist es dabei, das in der Rundläufertablettenpresse zu verarbeitende Pulverprodukt vor dem Verpressen in den Kavitäten zu überwachen, zum Beispiel in einer Fülleinrichtung, die das Pulverprodukt regelmäßig schwerkraftbedingt aus einer Füllkammer in die Kavitäten der Matrizenscheibe füllt. Mit spektroskopischen Messverfahren lässt sich zum Beispiel das gewünschte Mischverhältnis von aktiven pharmazeutischen Wirkstoffen (API) und Exzipienten oder Schmierstoffen zuverlässig überwachen. Allgemein werden hier in Rede stehende Sensoren auch als PAT-Sensoren (Process Analytical Technology Sensoren) bezeichnet.

In letzter Zeit gewinnen sogenannte Containment-Produktionseinrichtungen erheblich an Bedeutung. Bei solchen Produktionseinrichtungen sind konstruktive Maßnahmen getroffen, um einen Austritt von Produktstaub aus der Produktionseinrichtung in die Umgebung zu minimieren. Dies ist insbesondere bei der Verarbeitung pharmazeutischer Wirkstoffe und mit Blick auf den Schutz des Bedienpersonals von großer Bedeutung. Für eine vorgegebene Produktionseinrichtung und die vorgegebenen Produktionsbedingungen kann ein Containment-Level nach dem sogenannten SMEPAC-Test (Standardized Measurement of Equipment Particulate Airborne Concentration) definiert werden. Produktionseinrichtungen der hier in Rede stehenden Art können zum Beispiel einen Containment-Level nach dem SMEPAC-Test von OEB 3 oder höher aufweisen. Solche Produktionseinrichtungen weisen ein Gehäuse auf, das gegenüber der Umgebung dicht ausgestaltet ist, um den gewünschten Containment-Level zu erreichen. Ein Zugang in das Innere des Gehäuses soll entsprechend weitestgehend vermieden werden. Sofern ein Zugang erforderlich ist, können hierfür besonders vorgesehene Zugangsöffnungen, beispielsweise sogenannte Rapid Transfer Ports, vorgesehen sein.

In Punktionseinrichtungen einzusetzende Sensoren, zum Beispiel spektroskopisch arbeitende Sensoren, müssen für die Messung in dem Gehäuse der Produktionseinrichtung angeordnet werden. Sie kommen damit unweigerlich in Kontakt mit in dem Gehäuseinneren befindlichem Produktstaub. Bei einer späteren Entnahme des Sensors aus dem Gehäuse muss dieser entsprechend für eine ausreichende Dekontamination gereinigt werden. Bekannte Sensoren besitzen allerdings keine ausreichende Schutzklasse für eine Nassreinigung, also eine Reinigung mit einer Reinigungsflüssigkeit, die üblicherweise zur Dekontamination zum Einsatz kommt.

Auch besitzen bekannte Sensoren häufig eine schlecht zu reinigende Oberfläche, beispielsweise eine gerippte oder anderweitig konturierte Oberfläche. Gleichzeitig besteht beim Betrieb von Containment-Produktionseinrichtungen das Ziel, nach Ende der Produktion alle zum Beispiel pharmazeutischen Produktreste aus der Produktionseinrichtung zu entfernen ohne eine Bedienperson oder die Umgebung der Produktionseinrichtung zu kontaminieren. Dies ist entsprechend nur möglich, wenn ein im Gehäuseinneren angeordneter Sensor gemeinsam mit den übrigen im Gehäuseinneren angeordneten Komponenten gereinigt wird, was aus den erläuterten Gründen bei bekannten Sensoren nicht möglich ist. Dies verhindert bislang den Einsatz von PAT-Sensoren in Containment-Produktionseinrichtungen bzw. würde einen solchen Einsatz nur unter stark erhöhtem Zeitaufwand erlauben.

Aus DE 10 2016 202 315 A1 ist ein Getriebesensoranschlusssystem bekannt zum Anschließen und Kontaktieren eines innerhalb eines Getriebes positionierten Sensors. Eine Sensoraufnahme ist vorgesehen zum Aufnehmen und Positionieren des Sensors innerhalb des Getriebes sowie eine Gehäusedurchführung zum Durchführen einer mit dem Sensor verbundenen Sensorleitung durch ein Gehäuse des Getriebes sowie eine Gehäuseabdichtung zum Abdichten der Gehäusedurchführung gegen das Gehäuse. Die Sensoraufnahme ist über einen Sensorleitungskanal mit der Gehäusedurchführung verbunden. In einem Ausführungsbeispiel weist der Sensorleitungskanal einen ersten Rohrbogen im Bereich der Gehäusedurchführung und einen zweiten Rohrbogen im Bereich der Sensoraufnahme auf, wobei zwischen den Rohrbögen ein flexibler Schlauch vorgesehen sein kann, um den Sensorleitungskanal zu schließen.

Aus DE 10 2005 060 676 A1 ist ein Positionssensor nach einem berührungslosen, insbesondere magnetischen Funktionsprinzip bekannt in geschlossener Stabbauweise zum Einsatz vor allem in Flüssigkeiten. Dabei ist eine umlaufende Dichtung auf der Außenseite eines Sensorkopfgehäuses und/oder eines Sensorstabgehäuses vorgesehen.

Aus US 8 511 160 B2 ist ein Gehäuse für einen Sensor mit einem Halbleiterelement zum Messen der Wasserstoffkonzentration in einer isolierenden Flüssigkeit bekannt. Das Gehäuse weist ebenfalls Dichtmittel auf.

Ausgehend von dem erläuterten Stand der Technik liegt der Erfindung die Aufgabe zugrunde, eine Sensoranordnung und Verfahren der eingangs genannten Art bereitzustellen, die ohne stark erhöhten Zeitaufwand einen sicheren Einsatz in Containment-Produktionseinrichtungen erlauben.

Die Erfindung löst die Aufgabe durch eine Sensoranordnung nach Anspruch 1 sowie Verfahren nach den Ansprüchen 15, 16 und 17. Vorteilhafte Ausgestaltungen finden sich in den abhängigen Ansprüchen, der Beschreibung und den Figuren.

Für eine Sensoranordnung der eingangs genannten Art löst die Erfindung die Aufgabe dadurch, dass der Sensor zwischen dem Aussende- und/oder Aufnahmeabschnitt und dem Sensorabschnitt einen Dichtabschnitt aufweist, an dem ein Dichtschlauch mit einem ersten Ende dichtend befestigt ist, dass weiterhin ein Dichtbehälter vorgesehen ist, der mit einem ersten Ende dichtend an einer Zugangsöffnung eines Gehäuses einer Produktionseinrichtung befestigbar ist, dass der Sensor für einen Transfer in das Innere des Gehäuses und aus dem Gehäuse heraus in dem Dichtbehälter aufgenommen werden kann, und dass der Dichtschlauch mit einem zweiten Ende dichtend an dem Dichtbehälter befestigt ist, so dass der Sensor im an der Zugangsöffnung des Gehäuses befestigten Zustand des Dichtbehälters aus dem Dichtbehälter in das Innere des Gehäuses und aus dem Inneren des Gehäuses in den Dichtbehälter transferiert werden kann, wobei der Dichtschlauch während des Transfers eine dichte Trennung zwischen dem Sensorabschnitt und dem Inneren des Gehäuses gewährleistet.

Die Produktionseinrichtung kann zum Beispiel eine Tablettenpresse, wie eine Rundläufertablettenpresse, eine Kapselfüllmaschine oder ein Isolator für eine Tablettenpresse oder eine Kapselfüllmaschine sein. Ein solcher Isolator ist häufig einer Tablettenpresse oder einer Kapselfüllmaschine nachgeordnet und nimmt in der Tablettenpresse oder der Kapselfüllmaschine hergestellte Tabletten oder Kapseln auf und führt weitere Produktionsschritte durch, zum Beispiel eine Entstaubung und/oder eine (weitere) messtechnische Untersuchung. In einer Kapselfüllmaschine werden bekanntlich Kapseln mit Produkt, zum Beispiel Pulverprodukt oder Pellets, befüllt. Hierzu werden der Kapselfüllmaschine aus zwei Hälften bestehende Kapseln zugeführt, eine der Kapselhälften mit dem jeweiligen Produkt befüllt und die Kapseln durch Verbinden der Kapselhälften verschlossen. Beispielsweise in Rundläufertablettenpressen wird häufig pulverförmiges Produkt verarbeitet, wie zum Beispiel aktive pharmazeutische Wirkstoffe (API), Exzipienten und/oder Schmierstoffe. Das zu verarbeitende Pulvermaterial wird durch eine Fülleinrichtung Kavitäten einer Matrizenscheibe zugeführt, beispielsweise schwerkraftbedingt. In den Kavitäten wird das Pulvermaterial in bekannter Weise durch die Ober- und Unterstempel der Presse zu Tabletten verpresst. Die Kavitäten können unmittelbar durch Bohrungen in der Matrizenscheibe gebildet sein. Es können in der Matrizenscheibe aber auch lösbar befestigte Matrizenhülsen angeordnet sein, in denen die Kavitäten ausgebildet sind. Die Matrizenscheibe kann durch einen einstückigen Ring gebildet sein oder aus Ringsegmenten aufgebaut sein. Nach dem Verpressen des Pulverprodukts in den Kavitäten werden die hergestellten Tabletten in der Regel durch die Unterstempel auf die Oberseite der Matrizenscheibe gefördert und wie erläutert beispielsweise durch eine Abschlageinrichtung abgestreift und einem oder mehreren Auslässen der Rundläufertablettenpresse zugeführt.

Der vorliegenden Erfindung liegt zunächst der Gedanke zugrunde, aufgrund der schlechten Reinigbarkeit den Sensor nicht notwendigerweise innerhalb des Pressengehäuses zu reinigen, sondern eine Entfernbarkeit aus dem Pressengehäuse für eine Reinigung an einem anderen Ort zu ermöglichen. Im Stand der Technik existiert bislang keine Lösung für ein Ein- und Ausschleusen eines Sensors unter Containment-Bedingungen, also ohne das Containment der Produktionseinrichtung zu brechen. Hier setzt die vorliegende Erfindung an. Dazu wird zunächst zwischen einem Aussende- und/oder Aufnahmeabschnitt und einem Sensorabschnitt des Sensors ein Dichtabschnitt vorgesehen. Der Aussende- und/oder Aufnahmeabschnitt kann in einfachster Ausführung lediglich ein Bauteil sein, das Sensorsignale, zum Beispiel elektromagnetische Strahlung, weiterleitet und auf eine zu überwachende Komponente, zum Beispiel ein in der Produktionseinrichtung zu verarbeitendes Pulverprodukt oder ein hergestelltes Erzeugnis, wie eine Tablette oder Kapsel, überträgt bzw. von einer solchen Komponente kommende Sensorsignale aufnimmt und zurück weiterleitet. Der Aussende- und/oder Aufnahmeabschnitt kann zum Beispiel eine zylindrische Form besitzen. Er kann eine glatte Außenkontur aufweisen, die entsprechend gut reinigbar ist. Die durch den Aussende- und/oder Aufnahmeabschnitt ausgesendeten Sensorsignale kommen von dem Sensorabschnitt des Sensors und die empfangenen Sensorsignale werden an den Sensorabschnitt weitergeleitet. Der Sensorabschnitt kann mindestens ein Sensorelement umfassen. Er kann aber zum Beispiel auch lediglich optische Elemente zur entsprechenden Weiterleitung von elektromagnetischer Strahlung von einem weiter entfernten Strahlungssender an den Aussende- und/oder Aufnahmeabschnitt aufweisen. Ein Sender für die Sensorsignale, zum Beispiel elektromagnetische Strahlung, kann außerhalb des Sensorabschnitts angeordnet sein. Die Sensorsignale können dann zum Beispiel per Lichtwellenleiter zu dem Sensorabschnitt geführt sein und empfangene Sensorsignale können wiederum per Lichtwellenleiter zur weiteren Auswertung abgeführt werden. Insbesondere der Sensorabschnitt ist empfindlich gegen eine Reinigung zum Beispiel mit Reinigungsflüssigkeit. Er weist in der Regel nicht die erforderliche Schutzklasse auf. Auch besitzt der Sensorabschnitt häufig eine schlecht zu reinigende Außengeometrie, zum Beispiel eine stark konturierte Geometrie mit Kühlrippen oder ähnlichem, die eine Reinigung erheblich erschweren.

Erfindungsgemäß ist ein Dichtschlauch vorgesehen, der mit einem ersten Ende dichtend an dem Dichtabschnitt des Sensors befestigt ist. Sofern in diesem Zusammenhang von dichtend bzw. dicht gesprochen wird, ist hiermit gemeint, dass eine Dichtfunktion gegen Durchtritt von insbesondere Staub vorliegt, so dass ein Durchtritt von Staub zumindest minimiert ist. Vorzugsweise wird eine staubdichte Abdichtung erreicht. Beispielsweise kann ein Containment-Level nach dem SMEPAC-Test von OEB 3 oder höher erreicht werden. Der Dichtabschnitt kann zum Beispiel ringförmig ausgebildet sein. Er kann auch einen Dichtring umfassen, zum Beispiel einen O-Ring.

Während das erste Ende des Dichtschlauchs dicht auf dem Dichtabschnitt gehalten ist, ist das zweite Ende des Dichtschlauchs dicht an einem Dichtbehälter befestigt. Der Dichtbehälter besitzt ein erstes Ende, mit dem er an einer Zugangsöffnung eines Gehäuses der Produktionseinrichtung dicht befestigt werden kann und dient zum Transfer des Sensors in das Gehäuseinnere und aus dem Gehäuseinneren heraus. Das zweite Ende des Dichtschlauchs kann zum Beispiel im Bereich des ersten Endes an dem Dichtbehälter bzw. an dem ersten Ende des Dichtbehälters gehalten sein. Für einen Transfer in das Innere des Gehäuses wird der Sensor gemeinsam mit dem Dichtschlauch in den Dichtbehälter eingesetzt. Etwaige Versorgungs- und/oder Sensorsignalleitungen, über die eine elektrische Versorgung des Sensorabschnitts und/oder eine Zu- und Abführung von Sensorsignalen erfolgen kann, sind mit dem Sensorabschnitt verbunden und können hierzu zum Beispiel dicht durch ein zweites Ende des Dichtbehälters geführt sein. Die Durchführung kann zum Beispiel die Schutzklasse IP54 oder IP67 erfüllen, je nach Anforderung. Bei an die Zugangsöffnung des Gehäuses angesetztem Dichtbehälter mit darin angeordnetem Sensor kann die Zugangsöffnung des Gehäuses geöffnet werden, beispielsweise durch entsprechende Handschuheingriffe (Glove Ports) durch eine Bedienperson, die über die Handschuheingriffe ohne Brechen des Containments der Produktionseinrichtung die Zugangsöffnung aus dem Inneren des Gehäuses heraus öffnen kann. Anschließend kann der Sensor aus dem Dichtbehälter in das Innere des Gehäuses transferiert werden, wobei dies wiederum aus dem Inneren des Gehäuses heraus erfolgt, beispielsweise durch die genannten Handschuheingriffe. Anschließend kann die Zugangsöffnung des Gehäuses wieder verschlossen werden. In umgekehrter Reihenfolge kann der Sensor aus dem Inneren des Gehäuses wieder in den Dichtbehälter heraus transferiert werden.

Der Dichtschlauch wird während des Transfers umgestülpt. Er gewährleistet während des Transfers jederzeit eine dichte Trennung zwischen dem Sensorabschnitt und dem Inneren des Gehäuses. Auch während einer Produktion verbleibt der Dichtschlauch an dem Sensorabschnitt bzw. dem Dichtbehälter befestigt und gewährleistet somit auch während der Produktion eine Trennung des Sensorabschnitts vom Inneren des Gehäuses. Der Sensorabschnitt wird somit jederzeit vor einer Kontamination mit zum Beispiel Produktstaub im Inneren der Produktionseinrichtung geschützt. Lediglich der Aussende- und/oder Aufnahmeabschnitt kommt mit dem Produktstaub in Kontakt. Er ist aufgrund seiner ausreichenden Schutzklasse von zum Beispiel mindestens IP54 oder mindestens IP67 und seiner vorzugsweise glatten Oberfläche jedoch für eine Nassreinigung gemeinsam mit den übrigen Komponenten im Inneren des Gehäuses gut geeignet und kann entsprechend vor Entnahme des Sensors aus dem Gehäuseinneren dekontaminiert werden. Eine aufwendige Reinigung des Sensorabschnitts ist dagegen aufgrund des Schutzes durch den Dichtschlauch nicht erforderlich.

Die Erfindung realisiert somit eine Schnittstelle zum Ein- und Ausschleusen hochsensibler Sensorik in und aus einem Gehäuse einer Produktionseinrichtung. Der Dichtschlauch schützt dabei nicht nur den Sensorabschnitt, sondern auch eine den Sensor aus dem Gehäuseinneren entnehmende Bedienperson zuverlässig. Der Sensorabschnitt ist sowohl gegen Staub als auch gegen Flüssigkeit zuverlässig geschützt. Damit ist ein Einsatz von PAT-Sensoren auch unter Containment-Bedingungen zuverlässig und einfach möglich. Gegenüber einer sonst erforderlichen aufwendigen Reinigung des Sensorabschnitts ergibt sich eine erhebliche Zeitersparnis. Auch der Transport des entnommenen Sensors zum Beispiel in einen Reinigungsraum ist durch den Dichtbehälter erheblich vereinfacht. Ein Ein- und Ausschleusen des Sensors ist dabei sowohl vor, während als auch nach einem Produktionsprozess in der Produktionseinrichtung möglich. Auch kann die erfindungsgemäße Sensoranordnung in einfacher Weise in bestehenden Produktionseinrichtungen nachgerüstet werden. Erforderlich ist lediglich eine Zugangsöffnung, wie sie Containment-Produktionseinrichtungen allerdings ohnehin regelmäßig aufweisen, beispielsweise in Form von Rapid Transfer Ports. Im Inneren des Gehäuses kann der Sensor zum Beispiel an einer Fülleinrichtung zum Befüllen einer Matrizenscheibe einer Rundläufertablettenpresse mit Pulverprodukt angeordnet werden. Der Sensor kann dabei sowohl in einem Füllrohr, einem Fülltrichter oder einer Füllkammer einer solchen Fülleinrichtung angeordnet sein. Eine Anordnung ist aber auch an beliebigen anderen Positionen der Produktionseinrichtung denkbar, zum Beispiel an einer Abstreifeinrichtung einer Rundläufertablettenpresse, wo dann die bereits fertig hergestellten Tabletten überwacht werden. In Kapselfüllmaschinen oder Isolatoren sind ebenfalls beliebige Sensoranordnungen möglich.

Nach einer Ausgestaltung können der Dichtabschnitt und das erste Ende des Dichtschlauchs jeweils ringförmig ausgebildet sein, wobei das erste Ende des Dichtschlauchs klemmend an dem Dichtabschnitt gehalten ist. Das klemmende Halten kann zum Beispiel erreicht werden, indem der Durchmesser des ersten Endes des flexiblen Dichtschlauchs etwas kleiner ist als der Durchmesser des Dichtabschnitts. Das erste Ende des Dichtschlauchs kann dann durch elastisches Aufweiten über den Dichtabschnitt gezogen werden, wobei das erste Ende des Dichtschlauchs nach Rückformung in Richtung des Ausgangsdurchmessers in klemmenden Eingriff mit dem Dichtabschnitt gelangt. Wie bereits erwähnt, kann an dem Dichtabschnitt und/oder an dem ersten Ende des Dichtschlauchs auch ein Dichtring, beispielsweise ein O-Ring, zur weiter verbesserten Abdichtung vorgesehen sein. Selbstverständlich wäre es auch denkbar, dass das erste Ende des Dichtschlauchs dauerhaft an dem Dichtabschnitt befestigt ist, zum Beispiel angeschweißt oder dergleichen.

Auch das zweite Ende des Dichtschlauchs kann nach einer weiteren Ausgestaltung ringförmig ausgebildet sein, wobei das zweite Ende des Dichtschlauchs klemmend an dem Dichtbehälter gehalten ist. Das zweite Ende des Dichtschlauchs kann zum Beispiel einen Dichtring aufweisen, zum Beispiel einen O-Ring, der mittels eines Spannrings zwischen dem ersten Ende des Dichtbehälters und einem Anschlussflansch der Zugangsöffnung des Gehäuses der Produktionseinrichtung klemmend gehalten ist. Hierdurch ergibt sich eine besonders gute Abdichtung. Der Dichtring kann zum Beispiel in den Dichtschlauch eingeschweißt sein.

Wie bereits erläutert und an sich bekannt, können das erste Ende des Dichtbehälters und die Zugangsöffnung des Gehäuses einen sogenannten Rapid Transfer Port bilden. Ein Rapid Transfer Port ist ein Schnellwechselsystem bzw. Transfersystem, mit dem Komponenten kontaminationsfrei in einen bzw. aus einem abgeschlossenen Raum, hier das Innere des Gehäuses, ein- und ausgeschleust werden können. Ein erster Anschluss-Port ist an der Zugangsöffnung des Gehäuses ausgebildet. Ein zweiter Anschluss-Port ist an dem bewegbaren Dichtbehälter ausgebildet. Über den zweiten Anschluss-Port kann der Dichtbehälter an den ersten Anschluss-Port und damit das Gehäuse angedockt werden. Solche Rapid Transfer Ports weisen darüber hinaus üblicherweise Handschuheingriffe, sogenannte Glove Ports, auf, mit denen es möglich ist, den ersten Anschluss-Port von der Innenseite des Gehäuses aus zu öffnen ohne das Containment des Gehäuses zu brechen. Ein Abdocken des Dichtbehälters mit dem zweiten Anschluss-Port ist nur möglich, wenn die Zugangsöffnung des Gehäuses, insbesondere der erste Anschluss-Port, geschlossen ist. Auch der zweite Anschluss-Port am Dichtbehälter wird in der Regel dicht geschlossen. Der Dichtbehälter weist also insbesondere eine Verschlussklappe auf, mit der er bei geschlossener Zugangsöffnung des Gehäuses der Produktionseinrichtung dicht verschlossen ist, so dass bei von dem Gehäuse gelöstem Dichtbehälter ein Staubaustritt aus dem Dichtbehälter und damit eine Kontamination der Umgebung bzw. Gefährdung einer Bedienperson vermieden wird.

Wie bereits erläutert, können Versorgungs- und/oder Sensorsignalleitungen dichtend durch ein zweites Ende des Dichtbehälters geführt und mit dem Sensorabschnitt verbunden sein. Zum Beispiel kann ein das zweite Ende des Dichtbehälters verschließender Deckel eine dichte Leitungsdurchführung aufweisen. Sie kann zum Beispiel eine Schutzklasse von mindestens IP54 oder mindestens IP67 besitzen. Die Versorgungsleitung kann eine elektrische Versorgungsleitung zur elektrischen Versorgung des Sensorabschnitts sein. Die Sensorsignalleitung kann zum Beispiel ein Lichtwellenleiter für elektromagnetische Strahlung eines spektroskopischen Sensors sein.

Wenn der Sensor ein spektroskopischer Sensor ist, vorzugsweise ein NIR-Sensor (Nahinfrarotsensor), lassen sich besonders gute Messergebnisse zum Beispiel bei der Vermessung von in einer Rundläufertablettenpresse verarbeitetem Pulverprodukt oder der Vermessung von in einer Rundläufertablettenpresse erzeugten Tabletten erzielen. Insbesondere lassen sich mit spektroskopischen Sensoren Wirkstoffzusammensetzungen zuverlässig überprüfen.

Nach einer weiteren Ausgestaltung kann ein zweites Ende des Dichtbehälters eine Verschlusseinrichtung aufweisen, die das zweite Ende des Dichtbehälters im geschlossenen Zustand dichtend abschließt, und die für einen Zugang zum Innenraum des Dichtbehälters geöffnet werden kann. Durch eine solche zweite dichte Zugangsöffnung ist ein Herausführen zum Beispiel von Versorgungs- und/oder Signalleitungen aus dem Dichtbehälter nach Lösen von dem noch im Dichtbehälter befindlichen Sensor möglich. Die Leitungen müssen entsprechend nicht mit in einen Reinigungsraum transportiert werden, was die Handhabung erheblich vereinfacht. Auch ein Transfer des Sensors in und aus dem Dichtbehälter kann über die Verschlusseinrichtung des zweiten Endes des Dichtbehälters erfolgen, auch ohne den Dichtbehälter von dem Gehäuse der Tablettenpresse entfernen zu müssen. Dies erleichtert den Transfer weiter. Denkbar ist es zum Beispiel, den Dichtschlauch bei aus dem Dichtbehälter entnommenem Sensor mittels eines Clipand Cut-Verfahrens bzw. eines Heat Seal and Cut-Verfahrens von dem am Dichtbehälter verbleibenden zweiten Ende des Dichtschlauchs zu trennen, ohne dass Produkt aus dem Dichtschlauch in die Umgebung entweichen kann. Bei Clip- and Cut- oder Heat Seal and Cut-Verfahren erfolgt ein Durchtrennen des Dichtschlauchs unter gleichzeitiger dichter Versiegelung der durchtrennten Enden. Der kontaminierte Aussende- und/oder Aufnahmeabschnitt des Sensors ist dann zuverlässig mit einem entsprechend verkürzten Dichtschlauch verschlossen und kann sicher in einen Reinigungsraum zur abschließenden Reinigung verbracht werden.

Gemäß einer besonders praxisgemäßen Ausgestaltung kann der Dichtschlauch aus einem flexiblen Kunststoff bestehen.

Der Dichtbehälter kann zum Beispiel ein zylindrischer oder quaderförmiger Dichtbehälter sein.

Die Erfindung betrifft auch eine Produktionseinrichtung, umfassend ein Gehäuse mit einer Zugangsöffnung und umfassend mindestens eine erfindungsgemäße Sensoranordnung. Wie bereits erwähnt, kann die Produktionseinrichtung eine Containment-Produktionseinrichtung sein. Sie kann insbesondere einen Containment-Level nach OEB 3 oder höher erfüllen, gemessen nach dem SMEPAC-Test.

Wie ebenfalls bereits erwähnt, kann die Produktionseinrichtung eine Tablettenpresse oder eine Kapselfüllmaschine oder ein Isolator für eine Tablettenpresse oder eine Kapselfüllmaschine sein.

Es kann weiter vorgesehen sein, dass die Tablettenpresse eine Rundläufertablettenpresse ist, umfassend einen mittels eines Drehantriebs drehbaren Rotor, wobei der Rotor eine obere Stempelführung für obere Stempel der Rundläufertablettenpresse und eine untere Stempelführung für untere Stempel der Rundläufertablettenpresse sowie eine zwischen den Stempelführungen angeordnete Matrizenschreibe aufweist, wobei die Stempel mit Kavitäten der Matrizenscheibe zusammenwirken, weiter umfassend eine Fülleinrichtung, durch die zu verpressendes Pulvermaterial in die Kavitäten der Matrizenscheibe gefüllt wird, weiter umfassend mindestens eine obere Druckeinrichtung und mindestens eine untere Druckeinrichtung, die im Betrieb mit den oberen Stempeln und mit den unteren Stempeln zum Verpressen des Pulvermaterials in den Kavitäten der Matrizenscheibe zusammenwirken, weiter umfassend eine Auswurfeinrichtung, in der in den Kavitäten erzeugte Tabletten ausgeworfen werden Mögliche Ausgestaltungen der Rundläufertablettenpresse wurden bereits oben erläutert.

Die Erfindung löst die Aufgabe auch durch ein Verfahren zum Transferieren eines Sensors in ein Gehäuse einer Produktionseinrichtung mit einer erfindungsgemäßen Sensoranordnung, umfassend die Schritte:
- Versorgungs- und/oder Sensorsignalleitungen werden mit dem Sensorabschnitt des Sensors verbunden,
- der Dichtschlauch wird mit seinem ersten Ende dichtend an dem Dichtabschnitt des Sensors und mit seinem zweiten Ende dichtend an dem Dichtbehälter befestigt,
- der Sensor wird mit dem Dichtschlauch in den Dichtbehälter eingesetzt,
- der Dichtbehälter wird mit seinem ersten Ende dichtend an der Zugangsöffnung des Gehäuses der Produktionseinrichtung befestigt,
- die Zugangsöffnung des Gehäuses der Produktionseinrichtung wird geöffnet,
- vom Inneren des Gehäuses aus wird der Sensor aus dem Dichtbehälter entnommen und in das Innere des Gehäuses transferiert.

Die Versorgungs- und/oder Steuerleitungen können dabei durch das zweite Ende des Dichtbehälters hindurch mit dem Sensorabschnitt verbunden werden, wie dies bereits oben erläutert wurde.

Weiterhin löst die Erfindung die Aufgabe durch ein Verfahren zum Transferieren eines Sensors aus einem Gehäuse einer Produktionseinrichtung mit einer erfindungsgemäßen Sensoranordnung, umfassend die Schritte:
- vom Inneren des Gehäuses der Produktionseinrichtung aus wird der Sensor aus dem Inneren des Gehäuses in den Dichtbehälter transferiert,
- die Zugangsöffnung des Gehäuses wird geschlossen,
- der Dichtbehälter wird mit dem Sensor von der Zugangsöffnung des Gehäuses gelöst und der Sensor wird aus dem Dichtbehälter entnommen.

Schließlich löst die Erfindung die Aufgabe durch ein Verfahren zum Transferieren eines Sensors aus einem Gehäuse einer Produktionseinrichtung mit einer erfindungsgemäßen Sensoranordnung nach zumindest Anspruch 8, insbesondere nach mindestens einem weiteren Anspruch, umfassend die Schritte:
- vom Inneren des Gehäuses der Produktionseinrichtung aus wird der Sensor aus dem Inneren des Gehäuses in den Dichtbehälter transferiert,
- die Zugangsöffnung des Gehäuses wird geschlossen,
- das zweite Ende des Dichtbehälters wird durch Öffnen der Verschlusseinrichtung geöffnet,
- Versorgungs- und/oder Sensorsignalleitungen werden durch das zweite Ende des Dichtbehälters von dem Sensorabschnitt gelöst und aus dem Dichtbehälter entnommen,
- der Sensor wird durch das zweite Ende des Dichtbehälters aus dem Dichtbehälter entnommen, oder der Dichtbehälter wird mit dem Sensor von der Zugangsöffnung des Gehäuses gelöst und der Sensor wird aus dem Dichtbehälter entnommen.

Der Sensor kann dabei durch das zweite Ende des Dichtbehälters aus dem Dichtbehälter entnommen werden, ohne den Dichtbehälter vom Gehäuse zu lösen. Es ist aber auch möglich, den Dichtbehälter gemeinsam mit dem Sensor von dem Gehäuse zu lösen und den Sensor, beispielsweise anschließend aus dem Dichtbehälter zu entfernen.

Die Verfahrensschritte können bei den erfindungsgemäßen Verfahren in der Reihenfolge der Auflistung in den Verfahrensansprüchen durchgeführt werden. Zwingend ist dies jedoch nicht. Die Verfahren können auch mit der erfindungsgemäßen Produktionseinrichtung durchgeführt werden. Die Verfahren können weiterhin mit der erfindungsgemäßen Sensoranordnung bzw. der erfindungsgemäßen Produktionseinrichtung nach jeder zur Sensoranordnung bzw. zur Produktionseinrichtung erläuterten Ausgestaltung durchgeführt werden.

Nach einer weiteren Ausgestaltung kann bei den Verfahren zum Transferieren des Sensors aus dem Gehäuse der Produktionseinrichtung das Innere des Pressengehäuses vor dem Transferieren des Sensors in den Dichtbehälter mit einer Reinigungsflüssigkeit gereinigt werden. Mit einer solchen Nassreinigung wird der Gehäuseinnenraum von Kontaminationen durch Produktrückstände gereinigt. Beispielsweise Rundläufertablettenpressen dieser Art werden auch als WIP-Rundläufertablettenpressen (Wash-in-Place-Rundläufertablettenpressen) bezeichnet. Wie erläutert, kann der Aussende- und/oder Aufnahmeabschnitt eine hohe Schutzklasse besitzen, zum Beispiel mindestens IP54 oder mindestens IP67, so dass eine Nassreinigung problemlos möglich ist. Wie ebenfalls erläutert, kann er außerdem eine glatte Außenfläche besitzen, so dass eine gute Reinigbarkeit der Oberfläche gegeben ist. Der schwieriger zu reinigende Sensorabschnitt ist dagegen durch den Dichtschlauch gegen Kontamination geschützt und muss entsprechend nicht aufwendig im Zuge einer Nassreinigung gereinigt werden.

Bei den erfindungsgemäßen Verfahren zum Transferieren des Sensors aus dem Gehäuse der Produktionseinrichtung kann der Dichtschlauch im aus dem Dichtbehälter entnommenen Zustand des Sensors durchtrennt und dabei verschlossen werden, so dass der Sensor von dem an dem Dichtbehälter befestigten zweiten Ende des Dichtschlauchs gelöst werden kann. Dies wurde bereits oben erläutert. Zum Einsatz kommen können zum Beispiel sogenannte Cut- and Clip-Verfahren oder Heat Seal and Cut-Verfahren.

Ein Ausführungsbeispiel der Erfindung wird nachfolgend anhand von Figuren näher erläutert. Es zeigen schematisch:
- Fig. 1: eine erfindungsgemäße Produktionseinrichtung in einer Seitenansicht, vorliegend eine Rundläufertablettenpresse,
- Fig. 2: die in Fig. 1 gezeigte Rundläufertablettenpresse in einer abgewickelten Darstellung des Rotors,
- Fig. 3: eine erfindungsgemäße Sensoranordnung in einer teilweise transparenten perspektivischen Darstellung in einem ersten Betriebszustand,
- Fig. 4: die Sensoranordnung aus Fig. 3 in einer teilweise transparenten perspektivischen Darstellung in einem zweiten Betriebszustand,
- Fig. 5: die Sensoranordnung aus Fig. 3 in einer teilweise transparenten perspektivischen Darstellung in einem dritten Betriebszustand,
- Fig. 6: die Sensoranordnung aus Fig. 3 in einer teilweise transparenten perspektivischen Darstellung in einem vierten Betriebszustand, und
- Fig. 7: die Sensoranordnung aus Fig. 3 in einer Schnittansicht.

Soweit nichts anderes angegeben ist, bezeichnen in den Figuren gleiche Bezugszeichen gleiche Gegenstände.

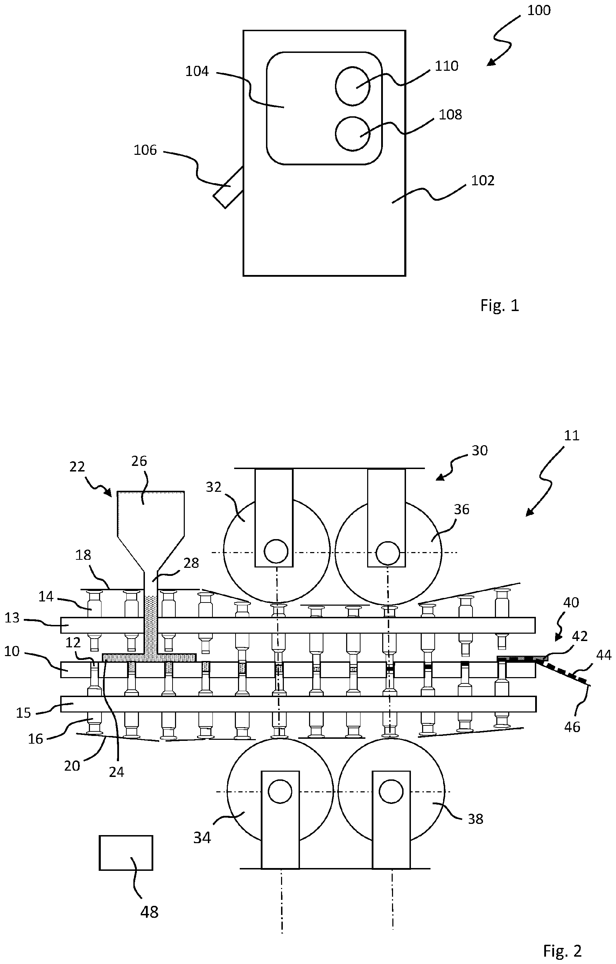

In Figur 1 ist schematisch eine Produktionseinrichtung 100, vorliegend eine Rundläufertablettenpresse 100, gezeigt. Die Rundläufertablettenpresse 100 weist ein Gehäuse 102 auf, das vorliegend eine Abdichtung gegenüber dem Austritt von Produktstaub in die Umgebung gewährleistet. Beispielsweise kann es sich bei der Rundläufertablettenpresse 100 um eine Containment-Presse handeln, zum Beispiel nach dem OEB-Level 3 oder höher, gemessen nach dem SMEPAC-Test. In dem Gehäuse 102 ist ein Sichtfenster 104 ausgebildet. Außerdem ist bei dem Bezugszeichen 106 ein Auslass der Rundläufertablettenpresse 100 für darin erzeugte Tabletten zu sehen. In dem Sichtfenster 104 ist eine Zugangsöffnung 108 ausgebildet, die vorliegend einen Rapid Transfer Port bildet. Eine weitere Zugangsöffnung 110 ist ebenfalls in dem Sichtfenster ausgebildet. Außerdem können in an sich bekannter Weise Handschuheingriffe, sogenannte Glove Ports, vorgesehen sein, mit denen unter Aufrechterhaltung des Containments durch eine Bedienperson Arbeiten im Inneren des Gehäuses 102 durchgeführt werden können.

Anhand der Figur 2 soll ein typischer Aufbau einer solchen Rundläufertablettenpresse erläutert werden. Die dargestellte Rundläufertablettenpresse umfasst einen durch einen nicht näher dargestellten Drehantrieb drehend angetriebenen Rotor 11 mit einer Matrizenscheibe 10, die eine Mehrzahl von Kavitäten 12 aufweist. Die Kavitäten 12 können beispielsweise durch Bohrungen der Matrizenscheibe 10 gebildet sein. Weiter umfasst der Rotor 11 eine Mehrzahl von oberen in einer oberen Stempelführung 13 geführten Stempeln 14 und eine Mehrzahl von in einer unteren Stempelführung 15 geführten unteren Stempeln 16, die mit der Matrizenscheibe 10 synchron umlaufen. Jeweils ein Paar aus oberem Stempel 14 und unterem Stempel 16 ist dabei einer Kavität 12 zugeordnet. Die axiale Bewegung der oberen Stempel 14 und unteren Stempel 16 im Zuge der Drehung des Rotors 11 wird durch obere Steuerkurvenelemente 18 und untere Steuerkurvenelemente 20 gesteuert. Die Rundläufertablettenpresse umfasst weiterhin eine Fülleinrichtung 22, die eine Füllkammer 24 aufweist. Die Fülleinrichtung 22 umfasst darüber hinaus ein trichterförmiges Füllmaterialreservoir 26, das über ein Füllrohr 28 mit der Füllkammer 24 in Verbindung steht. Auf diese Weise gelangt in dem vorliegenden Beispiel pulverförmiges Füllmaterial über das Füllrohr 28 schwerkraftbedingt in die Füllkammer 24 und aus dieser über eine an der Unterseite der Füllkammer 24 vorgesehene Befüllöffnung wiederum schwerkraftbedingt in die Kavitäten 12 der Matrizenscheibe 10.

Außerdem umfasst die Rundläufertablettenpresse eine Druckeinrichtung 30. Die Druckeinrichtung 30 besitzt eine Vordruckeinrichtung mit einer oberen Vordruckrolle 32 und einer unteren Vordruckrolle 34 sowie eine Hauptdruckeinrichtung mit einer oberen Hauptdruckrolle 36 und einer unteren Hauptdruckrolle 38. Darüber hinaus umfasst die Rundläufertablettenpresse eine Auswurfeinrichtung 40, vorliegend mit einem Abstreifer 42, der die in der Rundläufertablettenpresse hergestellten Tabletten 44 einem Tablettenablauf 46 zuführt.

Eine Auswerte- und Steuereinrichtung 48 steuert den Betrieb der Rundläufertablettenpresse und ist über nicht näher dargestellte Leitungen unter anderem mit dem Drehantrieb des Rotors 11 verbunden.

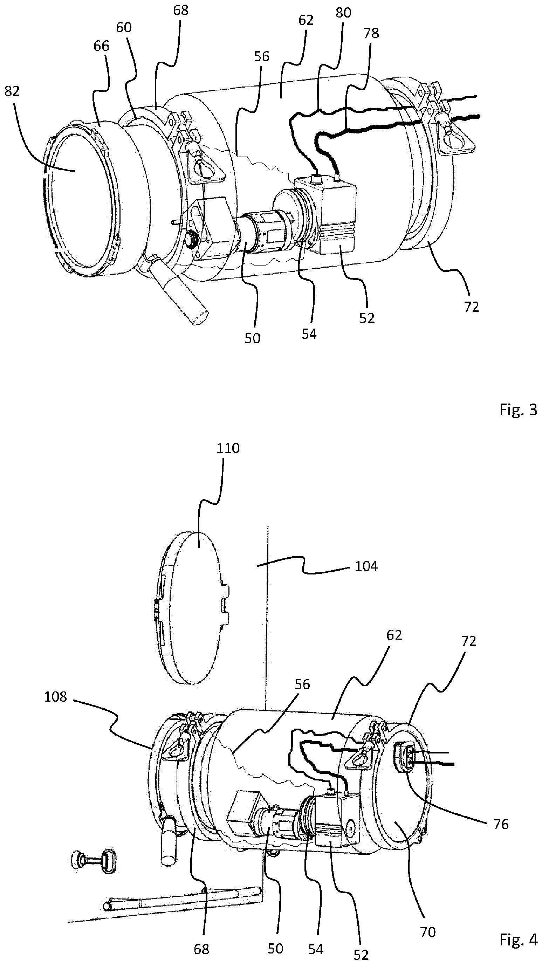

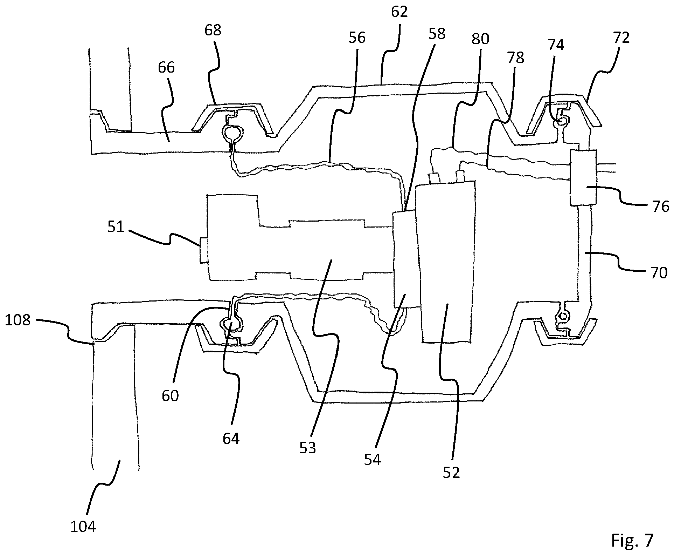

In Figur 3 ist eine erfindungsgemäße Sensoranordnung für eine Produktionseinrichtung gezeigt, beispielsweise für die Rundläufertablettenpresse 100 aus den Figuren 1 und 2. Die Sensoreinrichtung umfasst einen Sensor mit einem Aussende- und/oder Aufnahmeabschnitt 50 zum Aussenden und/oder Aufnehmen von Sensorsignalen sowie einen Sensorabschnitt 52. Zwischen dem Aussende- und/oder Aufnahmeabschnitt 50 und dem Sensorabschnitt 52 ist ein ringförmiger Dichtabschnitt 54 angeordnet, an dem ein Dichtschlauch 56 mit einem ersten ringförmigen Ende 58 dichtend, vorliegend klemmend, gehalten ist. Ein zweites, ebenfalls ringförmiges Ende 60 des Dichtschlauchs 56 ist an einem den Sensor aufnehmenden Dichtbehälter 62 ebenfalls klemmend gehalten. Wie insbesondere in Figur 7 zu erkennen, ist an dem zweiten Ende 60 des Dichtschlauchs 56 ein Dichtring 64 angeordnet, beispielsweise angeschweißt, der zwischen einer ein erstes Ende des Dichtbehälters 62 bildenden Stirnwand des Dichtbehälters 62 und einem Anschlussflansch 66 der Zugangsöffnung 108 des Gehäuses 102 der Produktionseinrichtung klemmend gehalten ist, vorliegend mittels eines Spannrings 68. Das gegenüberliegende zweite Ende des Dichtbehälters 62 weist eine Verschlusseinrichtung in Form einer Verschlussklappe 70 auf, die ebenfalls mittels eines Spannrings 72 und eines Dichtrings 74 dicht klemmend an einer das zweite Ende bildenden Stirnwand des Dichtbehälters 62 befestigt ist. Die Verschlussklappe 70 weist eine dichte Leitungsdurchführung 76 auf, durch die im dargestellten Beispiel ein Lichtwellenleiter 78 und eine elektrische Versorgungsleitung 80 geführt und mit dem Sensorabschnitt 52 verbunden sind. In Figur 7 ist außerdem zu erkennen, dass der Aussende- und/oder Aufnahmeabschnitt 50 einen zylindrischen Aussender und/oder Aufnehmer 51 und einen diesen tragenden Tragabschnitt 53 aufweist. Mittels des Tragabschnitts 53 kann die Position des Aussenders und/oder Aufnehmers 51 in Längsrichtung verstellt werden, in Figur 7 nach links und rechts.

Auf diese Weise kann der Aussender und/oder Aufnehmer 51 präzise an die gewünschte Position im Inneren des Gehäuses verfahren werden.

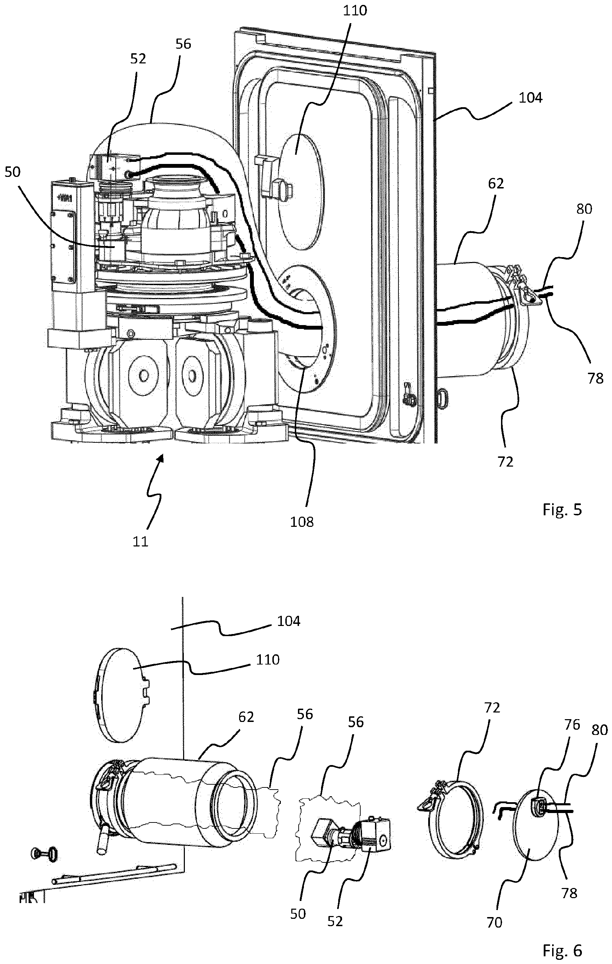

Zum Transfer des Sensors in das Innere des Gehäuses 102 der Produktionseinrichtung 100 werden der Lichtwellenleiter 78 und die elektrische Versorgungsleitung 80 zunächst durch die Leitungsdurchführung 76 hindurchgeführt und mit dem Sensorabschnitt 52 des Sensors verbunden. Der Dichtschlauch 56 wird mit seinem ersten Ende 58 an dem ringförmigen Dichtabschnitt 54 und mit seinem zweiten Ende 60 dichtend an dem ersten Ende des Dichtbehälters 62 befestigt. Diese Befestigung kann im Zuge des Ansetzens des Dichtbehälters 62 an die Zugangsöffnung 108 des Gehäuses 102 erfolgen. Vor dem Ansetzen wird der Sensor mit dem Dichtschlauch 56 sowie dem Lichtwellenleiter 78 und der Versorgungsleitung 80 in den Dichtbehälter 62 eingesetzt. Der an das Gehäuse 102 angesetzte Zustand des Dichtbehälters 62 ist in Figur 4 gezeigt. Anschließend wird beispielsweise durch die erläuterten Handschuheingriffe vom Inneren des Gehäuses 102 aus die Verschlussöffnung in Form des Rapid Transfer Ports geöffnet, wobei auch eine korrespondierende Verschlussklappe 82 an dem Dichtbehälter 62 geöffnet wird, so dass ein Durchgang zwischen dem Inneren des Dichtbehälters 62 und dem Inneren des Gehäuses 102 entsteht. Anschließend kann der Sensor wiederum zum Beispiel über die Handschuheingriffe vom Inneren des Gehäuses 102 aus, aus dem Dichtbehälter 62 in das Innere des Gehäuses 102 transferiert und an die gewünschte Position im Inneren des Gehäuses 102 zum Beispiel an der Fülleinrichtung 22 angeordnet werden. Im Zuge des Transfers des Sensors wird der Dichtschlauch 56 umgestülpt. Der im Inneren des Gehäuses 102 angeordnete Zustand des Sensors ist in Figur 5 gezeigt. Es sei daraufhin gewiesen, dass der Rotor 11 der Rundläufertablettenpresse in Figur 5 aus Veranschaulichungsgründen nur teilweise dargestellt ist. Insbesondere aus einem Vergleich der Figuren 4 und 5 wird deutlich, dass der Sensorabschnitt 52 während des Transfers und im eingesetzten Zustand jederzeit durch den Dichtschlauch 56 vor einer Kontamination durch im Inneren des Gehäuses 102 befindliches Pulverprodukt geschützt ist.

In umgekehrter Reihenfolge kann der Sensor wieder aus dem Inneren des Gehäuses 102 heraus transferiert werden. Insbesondere kann wiederum zum Beispiel über die Handschuheingriffe der Sensor aus dem Inneren des Gehäuses heraus zurück in den Dichtbehälter 62 transferiert werden. Anschließend wird die Verschlussöffnung 108 und damit auch die Verschlussklappe 82 des Dichtbehälters 62 dicht verschlossen. Im Anschluss kann zunächst durch Lösen des Spannrings 72 am zweiten Ende des Dichtbehälters 62 die Verschlussklappe 70 geöffnet werden, so dass die Versorgungsleitung 80 und der Lichtwellenleiter 78 von dem Sensorabschnitt 52 gelöst werden können. Im Anschluss kann der Sensor aus dem zum Beispiel noch an dem Gehäuse 102 angeordneten Dichtbehälter 62 durch das zweite Ende heraus entnommen werden. Um den Sensor auch ohne Lösen des zweiten Endes des Dichtschlauchs 56 von dem Dichtbehälter 62 entfernen und beispielsweise an einem getrennten Ort reinigen zu können, kann der Dichtschlauch 56 zum Beispiel mittels eines Clip and Cut oder Heat Seal and Cut-Verfahrens durchtrennt und dabei wieder geschlossen werden, wie dies in Figur 6 dargestellt ist. Dadurch kann der Sensor mit dem durch das Abschneiden verkleinerten Dichtschlauch 56 in einfacher Weise z. B. in einen Reinigungsraum transportiert werden, wo der mit Pulverprodukt in Kontakt gekommene Aussende- und/oder Aufnahmeabschnitt 50 des Sensors gereinigt werden kann.

Es sei noch darauf hingewiesen, dass aus Veranschaulichungsgründen einige Komponenten in der Darstellung in Figur 7 gegenüber den Darstellungen der Figuren 3 bis 6 vereinfacht dargestellt sind, zum Beispiel der Aussende- und/oder Aufnahmeabschnitt 50. Tatsächlich handelt es sich hierbei insbesondere um dieselben Komponenten.

### Bezugszeichenliste

- 10: Matrizenscheibe
- 11: Rotor
- 12: Kavitäten
- 13: obere Stempelführung
- 14: Stempel
- 15: untere Stempelführung
- 16: Stempel
- 18: oberes Steuerkurvenelement
- 20: unteres Steuerkurvenelement
- 22: Fülleinrichtung
- 24: Füllkammer
- 26: Füllmaterialreservoir
- 28: Füllrohr
- 30: Druckeinrichtung
- 32: obere Vordruckrolle
- 34: untere Vordruckrolle
- 36: obere Hauptdruckrolle
- 38: untere Hauptdruckrolle
- 40: Auswurfeinrichtung
- 42: Abstreifer
- 44: Tablette
- 46: Tablettenablauf
- 48: Auswerte- und Steuereinrichtung
- 50: Aussende- und/oder Aufnahmeabschnitt
- 51: Aussender und/oder Aufnehmer
- 52: Sensorabschnitt
- 53: Tragabschnitt
- 54: Dichtabschnitt
- 56: Dichtschlauch
- 58: erstes Ende des Dichtschlauchs
- 60: zweites Ende des Dichtschlauchs
- 62: Dichtbehälter
- 64: Dichtring
- 66: Anschlussflansch
- 68: Spannring
- 70: Verschlussklappe
- 72: Spannring
- 74: Dichtring
- 76: Leitungsdurchführung
- 78: Lichtwellenleiter
- 80: Versorgungsleitung
- 82: Verschlussklappe
- 100: Produktionseinrichtung / Rundläufertablettenpresse
- 102: Gehäuse
- 104: Sichtfenster
- 106: Auslass der Rundläufertablettenpresse
- 108: Zugangsöffnung
- 110: Zugangsöffnung

## Patentansprüche

1. Sensoranordnung für eine Produktionseinrichtung (100), umfassend einen Sensor und einen Dichtschlauch (56), wobei der Sensor einen Aussende- und/oder Aufnahmeabschnitt (50) zum Aussenden und/oder Aufnehmen von Sensorsignalen und einen Sensorabschnitt (52) umfasst, wobei der Sensor zwischen dem Aussende- und/oder Aufnahmeabschnitt (50) und dem Sensorabschnitt (52) einen Dichtabschnitt (54) aufweist, an dem der Dichtschlauch (56) der Sensoranordnung mit einem ersten Ende (58) dichtend befestigt ist, **dadurch gekennzeichnet, dass** die Sensoranordnung weiterhin einen Dichtbehälter (62) umfasst, der mit einem ersten Ende dichtend an einer Zugangsöffnung (108) eines Gehäuses (102) einer Produktionseinrichtung (100) befestigbar ist, dass der Sensor für einen Transfer in das Innere des Gehäuses (102) und aus dem Gehäuse(102) heraus in dem Dichtbehälter (62) aufgenommen werden kann, und dass der Dichtschlauch (56) mit einem zweiten Ende (60) dichtend an dem Dichtbehälter (62) befestigt ist, so dass der Sensor im an der Zugangsöffnung (108) des Gehäuses (102) befestigten Zustand des Dichtbehälters (62) aus dem Dichtbehälter (62) in das Innere des Gehäuses (102) und aus dem Inneren des Gehäuses (102) in den Dichtbehälter (62) transferiert werden kann, wobei der Dichtschlauch (56) während des Transfers eine dichte Trennung zwischen dem Sensorabschnitt (52) und dem Inneren des Gehäuses (102) gewährleistet.

2. Sensoranordnung nach Anspruch 1, **dadurch gekennzeichnet, dass** der Dichtabschnitt (54) ringförmig ausgebildet ist, und dass das erste Ende (58) des Dichtschlauchs (56) ringförmig ausgebildet ist, wobei das erste Ende (58) des Dichtschlauchs (56) klemmend an dem Dichtabschnitt (54) gehalten ist.

3. Sensoranordnung nach einem der vorhergehenden Ansprüche, **dadurch gekennzeichnet, dass** das zweite Ende (60) des Dichtschlauchs (56) ringförmig ausgebildet ist, wobei das zweite Ende (60) des Dichtschlauchs (56) klemmend an dem Dichtbehälter (62) gehalten ist.

4. Sensoranordnung nach Anspruch 3, **dadurch gekennzeichnet, dass** das zweite Ende (60) des Dichtschlauchs (60) einen Dichtring (64) aufweist, der mittels eines Spannrings (68) zwischen dem ersten Ende des Dichtbehälters (62) und einem Anschlussflansch (66) der Zugangsöffnung (108) des Gehäuses (102) der Produktionseinrichtung (100) klemmend gehalten ist.

5. Sensoranordnung nach einem der vorhergehenden Ansprüche, **dadurch gekennzeichnet, dass** das erste Ende des Dichtbehälters (62) und die Zugangsöffnung (108) des Gehäuses (102) einen Rapid Transfer Port bilden und/oder dass Versorgungs- und/oder Sensorsignalleitungen (78, 80) dichtend durch ein zweites Ende des Dichtbehälters (62) geführt und mit dem Sensorabschnitt (52) verbunden sind.

6. Sensoranordnung nach einem der vorhergehenden Ansprüche, **dadurch gekennzeichnet, dass** der Sensor ein spektroskopischer Sensor, vorzugweise ein NIR-Sensor ist.

7. Sensoranordnung nach einem der vorhergehenden Ansprüche, **dadurch gekennzeichnet, dass** ein zweites Ende des Dichtbehälters (62) eine Verschlusseinrichtung aufweist, die das zweite Ende des Dichtbehälters (62) im geschlossenen Zustand dichtend abschließt, und die für einen Zugang zum Innenraum des Dichtbehälters (62) geöffnet werden kann.

8. Sensoranordnung nach einem der vorhergehenden Ansprüche, **dadurch gekennzeichnet, dass** der Dichtschlauch (56) aus einem flexiblen Kunststoff besteht und/oder dass der Dichtbehälter (62) ein zylindrischer oder quaderförmiger Dichtbehälter ist.

9. Produktionseinrichtung, umfassend ein Gehäuse (102) mit einer Zugangsöffnung (108) und umfassend mindestens eine Sensoranordnung nach einem der vorhergehenden Ansprüche.

10. Produktionseinrichtung nach Anspruch 9, **dadurch gekennzeichnet, dass** die Produktionseinrichtung (100) eine Containment-Produktionseinrichtung (100) ist und/oder dass die Produktionseinrichtung (100) eine Tablettenpresse (100) oder eine Kapselfüllmaschine oder ein Isolator für eine Tablettenpresse (100) oder eine Kapselfüllmaschine ist.

11. Produktionseinrichtung nach Anspruch 10, **dadurch gekennzeichnet, dass** die Tablettenpresse (100) eine Rundläufertablettenpresse (100) ist, umfassend einen mittels eines Drehantriebs drehbaren Rotor (11), wobei der Rotor (11) eine obere Stempelführung (13) für obere Stempel (14) der Rundläufertablettenpresse (100) und eine untere Stempelführung (15) für untere Stempel (16) der Rundläufertablettenpresse (100) sowie eine zwischen den Stempelführungen (13, 15) angeordnete Matrizenschreibe (10) aufweist, wobei die Stempel (14, 16) mit Kavitäten (12) der Matrizenscheibe (10) zusammenwirken, weiter umfassend eine Fülleinrichtung (22), durch die zu verpressendes Pulvermaterial in die Kavitäten (12) der Matrizenscheibe (10) gefüllt wird, weiter umfassend mindestens eine obere Druckeinrichtung und mindestens eine untere Druckeinrichtung, die im Betrieb mit den oberen Stempeln (14) und mit den unteren Stempeln (16) zum Verpressen des Pulvermaterials in den Kavitäten (12) der Matrizenscheibe (10) zusammenwirken, weiter umfassend eine Auswurfeinrichtung (40), in der in den Kavitäten (12) erzeugte Tabletten (44) ausgeworfen werden.

12. Verfahren zum Transferieren eines Sensors in ein Gehäuse (102) einer Produktionseinrichtung (100) mit einer Sensoranordnung nach einem der Ansprüche 1 bis 8, umfassend die Schritte:
• Versorgungs- und/oder Sensorsignalleitungen (78, 80) werden mit dem Sensorabschnitt (52) des Sensors verbunden,
• der Dichtschlauch (56) wird mit seinem ersten Ende (58) dichtend an dem Dichtabschnitt (54) des Sensors und mit seinem zweiten Ende (60) dichtend an dem Dichtbehälter (62) befestigt,
• der Sensor wird mit dem Dichtschlauch (56) in den Dichtbehälter (62) eingesetzt,
• der Dichtbehälter (62) wird mit seinem ersten Ende dichtend an der Zugangsöffnung (108) des Gehäuses (102) der Produktionseinrichtung (100) befestigt,
• die Zugangsöffnung (108) des Gehäuses (102) der Produktionseinrichtung (100) wird geöffnet,
• vom Inneren des Gehäuses (102) aus wird der Sensor aus dem Dichtbehälter (62) entnommen und in das Innere des Gehäuses (102) transferiert.

13. Verfahren zum Transferieren eines Sensors aus einem Gehäuse (102) einer Produktionseinrichtung (100) mit einer Sensoranordnung nach einem der Ansprüche 1 bis 8, umfassend die Schritte:
• vom Inneren des Gehäuses (102) der Produktionseinrichtung (100) aus wird der Sensor aus dem Inneren des Gehäuses (102) in den Dichtbehälter (62) transferiert,
• die Zugangsöffnung (108) des Gehäuses (102) wird geschlossen,
• der Dichtbehälter (62) wird mit dem Sensor von der Zugangsöffnung (108) des Gehäuses (102) gelöst und der Sensor wird aus dem Dichtbehälter (62) entnommen.

14. Verfahren zum Transferieren eines Sensors aus einem Gehäuse (102) einer Produktionseinrichtung (100) mit einer Sensoranordnung nach zumindest Anspruch 7, umfassend die Schritte:
• vom Inneren des Gehäuses (102) der Produktionseinrichtung (100) aus wird der Sensor aus dem Inneren des Gehäuses (102) in den Dichtbehälter (62) transferiert,
• die Zugangsöffnung (108) des Gehäuses (102) wird geschlossen,
• das zweite Ende des Dichtbehälters (62) wird durch Öffnen der Verschlusseinrichtung geöffnet,
• Versorgungs- und/oder Sensorsignalleitungen (78, 80) werden durch das zweite Ende des Dichtbehälters (62) von dem Sensorabschnitt (52) gelöst und aus dem Dichtbehälter (62) entnommen,
• der Sensor wird durch das zweite Ende des Dichtbehälters (62) aus dem Dichtbehälter (62) entnommen, oder der Dichtbehälter (62) wird mit dem Sensor von der Zugangsöffnung (108) des Gehäuses (102) gelöst und der Sensor wird aus dem Dichtbehälter (62) entnommen.

15. Verfahren nach einem der Ansprüche 12 bis 14, **dadurch gekennzeichnet, dass** das Innere des Gehäuses (102) vor dem Transferieren des Sensors in den Dichtbehälter (62) mit einer Reinigungsflüssigkeit gereinigt wird und/oder dass der Dichtschlauch (56) im aus dem Dichtbehälter (62) entnommenen Zustand des Sensors durchtrennt und dabei verschlossen wird, so dass der Sensor von dem an dem Dichtbehälter (62) befestigten zweiten Ende (60) des Dichtschlauchs (56) gelöst werden kann.

## Claims

1. A sensor arrangement for a production apparatus (100), comprising a sensor and a sealing hose (56), wherein the sensor comprises an emitting and/or receiving portion (50) for emitting and/or receiving sensor signals and a sensor portion (52), wherein, between the emitting and/or receiving portion (50) and the sensor portion (52), the sensor comprises a sealing portion (54) to which the sealing hose (56) of the sensor arrangement is fastened in a sealing manner by a first end (58), **characterized in that** the sensor arrangement further comprises a sealing container (62) which can be fastened by a first end to an access opening (108) of a housing (102) of a production apparatus (100) in a sealing manner, **in that** the sensor can be received in the sealing container (62) for a transfer into the interior of the housing (102) and out of the housing (102), and **in that** the sealing hose (56) is fastened by a second end (60) to the sealing container (62) in a sealing manner such that, in the state of the sealing container (62) fastened to the access opening (108) of the housing (102), the sensor can be transferred out of the sealing container (62) into the interior of the housing (102) and out of the interior of the housing (102) into the sealing container (62), wherein the sealing hose (56) ensures a tight separation between the sensor portion (52) and the interior of the housing (102) during the transfer.

2. The sensor arrangement according to claim 1, **characterized in that** the sealing portion (54) is annular, and **in that** the first end (58) of the sealing hose (56) is annular, wherein the first end (58) of the sealing hose (56) is held in a clamped manner against the sealing portion (54).

3. The sensor arrangement according to any one of the preceding claims, **characterized in that** the second end (60) of the sealing hose (56) is annular, wherein the second end (60) of the sealing hose (56) is held in a clamped manner against the sealing container (62).

4. The sensor arrangement according to claim 3, **characterized in that** the second end (60) of the sealing hose (60) comprises a sealing ring (64) which is held in a clamped manner between the first end of the sealing container (62) and a connection flange (66) of the access opening (108) of the housing (102) of the production apparatus (100) by means of a clamping ring (68).

5. The sensor arrangement according to any one of the preceding claims, **characterized in that** the first end of the sealing container (62) and the access opening (108) of the housing (102) form a rapid transfer port and/or **in that** supply and/or sensor signal lines (78, 80) are guided in a sealed manner through a second end of the sealing container (62) and are connected to the sensor portion (52).

6. The sensor arrangement according to any one of the preceding claims, **characterized in that** the sensor is a spectroscopic sensor, preferably an NIR sensor.

7. The sensor arrangement according to any one of the preceding claims, **characterized in that** a second end of the sealing container (62) comprises a closure apparatus which closes off the second end of the sealing container (62) in a sealing manner in the closed state, and which can be opened for access to the interior of the sealing container (62).

8. The sensor arrangement according to any one of the preceding claims, **characterized in that** the sealing hose (56) consists of a flexible plastics material and/or **in that** the sealing container (62) is a cylindrical or cuboid sealing container.

9. A production apparatus, comprising a housing (102) with an access opening (108) and comprising at least one sensor arrangement according to any one of the preceding claims.

10. The production apparatus according to claim 9, **characterized in that** the production apparatus (100) is a containment production apparatus (100) and/or **in that** the production apparatus (100) is a tablet press (100) or a capsule-filling machine or an isolator for a tablet press (100) or capsule-filling machine.

11. The production apparatus according to claim 10, **characterized in that** the tablet press (100) is a rotary tablet press (100), comprising a rotor (11) that can be rotated by means of a rotary drive, wherein the rotor (11) comprises an upper punch guide (13) for upper punches (14) of the rotary tablet press (100) and a lower punch guide (15) for lower punches (16) of the rotary tablet press (100) as well as a die plate (10) arranged between the punch guides (13, 15), wherein the punches (14, 16) cooperate with cavities (12) of the die plate (10), further comprising a filling apparatus (22) by means of which powder material to be pressed is filled into the cavities (12) of the die plate (10), further comprising at least one upper pressing apparatus and at least one lower pressing apparatus which cooperate with the upper punches (14) and the lower punches (16) during operation in order to press the powder material in the cavities (12) of the die plate (10), further comprising an ejection apparatus (40) in which tablets (44) produced in the cavities (12) are ejected.

12. A method for transferring a sensor into a housing (102) of a production apparatus (100) with a sensor arrangement according to any one of claims 1 to 8, comprising the following steps:
• supply and/or sensor signal lines (78, 80) are connected to the sensor portion (52) of the sensor,
• the sealing hose (56) is fastened by its first end (58) to the sealing portion (54) of the sensor in a sealing manner and by its second end (60) to the sealing container (62) in a sealing manner,
• the sensor is inserted with the sealing hose (56) into the sealing container (62),
• the sealing container (62) is fastened by its first end to the access opening (108) of the housing (102) of the production apparatus (100) in a sealing manner,
• the access opening (108) of the housing (102) of the production apparatus (100) is opened,
• from the interior of the housing (102), the sensor is removed from the sealing container (62) and transferred into the interior of the housing (102).

13. A method for transferring a sensor from a housing (102) of a production apparatus (100) with a sensor arrangement according to any one of claims 1 to 8, comprising the following steps:
• from the interior of the housing (102) of the production apparatus (100), the sensor is transferred from the interior of the housing (102) into the sealing container (62),
• the access opening (108) of the housing (102) is closed,
• the sealing container (62) is released with the sensor from the access opening (108) of the housing (102) and the sensor is removed from the sealing container (62).

14. A method for transferring a sensor from a housing (102) of a production apparatus (100) with a sensor arrangement according to at least claim 7, comprising the following steps:
• from the interior of the housing (102) of the production apparatus (100), the sensor is transferred from the interior of the housing (102) into the sealing container (62),
• the access opening (108) of the housing (102) is closed,
• the second end of the sealing container (62) is opened by opening the closure apparatus,
• supply and/or sensor signal lines (78, 80) are released from the sensor portion (52) through the second end of the sealing container (62) and removed from the sealing container (62),
• the sensor is removed from the sealing container (62) through the second end of the sealing container (62), or the sealing container (62) is released with the sensor from the access opening (108) of the housing (102) and the sensor is removed from the sealing container (62).

15. The method according to any one of claims 12 to 14, **characterized in that** the interior of the housing (102) is cleaned with a cleaning fluid before the sensor is transferred into the sealing container (62) and/or **in that** the sealing hose (56) is severed and closed in the state of the sensor removed from the sealing container (62), such that the sensor can be released from the second end (60) of the sealing hose (56) fastened to the sealing container (62).

## Revendications

1. Agencement de capteur pour un dispositif de production (100), comprenant un capteur et un tuyau étanche (56), le capteur comprenant une partie d'émission et/ou une partie de réception (50) pour l'émission et/ou la réception de signaux de capteur et une partie de capteur (52), le capteur présentant une partie étanche (54) entre la partie d'émission et/ou la partie de réception (50) et la partie de capteur (52), sur laquelle le tuyau étanche (56) de l'agencement de capteur est fixé de façon étanche avec une première extrémité (58), **caractérisé en ce que** l'agencement de capteur comprend en outre un récipient étanche (62), lequel peut être fixé de façon étanche sur une ouverture d'accès (108) d'un boîtier (102) d'un dispositif de production (100) avec une première extrémité, **en ce que** le capteur peut être accueilli dans le récipient étanche (62) pour un transfert à l'intérieur du boîtier (102) et hors du boîtier (102), et **en ce que** le tuyau étanche (56) est fixé de façon étanche sur le récipient étanche (62) avec une deuxième extrémité (60), de telle sorte que le capteur peut être transféré hors du récipient étanche (62) à l'intérieur du boîtier (102) et hors de l'intérieur du boîtier (102) dans le récipient étanche (62), dans l'état avec fixation du récipient étanche (62) sur l'ouverture d'accès (108) du boîtier (102), le tuyau étanche (56) garantissant une séparation étanche entre la partie de capteur (52) et l'intérieur du boîtier (102) pendant le transfert.

2. Agencement de capteur selon la revendication 1, **caractérisé en ce que** la partie étanche (54) est conçue de façon annulaire, et **en ce que** la première extrémité (58) du tuyau étanche (56) est conçue de façon annulaire, la première extrémité (58) du tuyau étanche (56) étant maintenue par serrage sur la partie étanche (54).

3. Agencement de capteur selon l'une des revendications précédentes, **caractérisé en ce que** la deuxième extrémité (60) du tuyau étanche (56) est conçue de façon annulaire, la deuxième extrémité (60) du tuyau étanche (56) étant maintenue par serrage sur le récipient étanche (62)

4. Agencement de capteur selon la revendication 3, **caractérisé en ce que** la deuxième extrémité (60) du tuyau étanche (60) présente une bague d'étanchéité (64), laquelle est maintenue par serrage entre la première extrémité du récipient étanche (62) et une bride de raccordement (66) de l'ouverture d'accès (108) du boîtier (102) du dispositif de production (100), au moyen d'une bague de serrage (68).

5. Agencement de capteur selon l'une des revendications précédentes, **caractérisé en ce que** la première extrémité du récipient étanche (62) et l'ouverture d'accès (108) du boîtier (102) forment un port de transfert rapide et/ou **en ce que** les lignes d'alimentation et/ou de signal de capteur (78, 80) sont menées de façon étanche par une deuxième extrémité du récipient étanche (62) et sont reliées avec la partie de capteur (52).

6. Agencement de capteur selon l'une des revendications précédentes, **caractérisé en ce que** le capteur est un capteur spectroscopique, de préférence un capteur NIR.

7. Agencement de capteur selon l'une des revendications précédentes, **caractérisé en ce qu'**une deuxième extrémité du récipient étanche (62) présente un dispositif de fermeture, lequel ferme de façon étanche la deuxième extrémité du récipient étanche (62) dans l'état fermé, et lequel peut être ouvert pour un accès à l'espace intérieur du récipient étanche (62).

8. Agencement de capteur selon l'une des revendications précédentes, **caractérisé en ce que** le tuyau étanche (56) se compose d'une matière plastique souple et/ou **en ce que** le récipient étanche (62) est un récipient étanche cylindrique ou parallélépipédique.

9. Dispositif de production comprenant un boîtier (102) avec une ouverture d'accès (108) et comprenant au moins un agencement de capteur selon l'une des revendications précédentes.

10. Dispositif de production selon la revendication 9, **caractérisé en ce que** le dispositif de production (100) est un dispositif de production de confinement (100) et/ou **en ce que** le dispositif de production (100) est une presse à comprimés (100) ou une machine de remplissage de capsules ou un isolateur pour une presse à comprimés (100) ou une machine de remplissage de capsules.

11. Presse rotative selon la revendication 10, **caractérisée en ce que** la presse à comprimés (100) est une presse à comprimés rotative comprenant un rotor rotatif (11) au moyen d'un entraînement rotatif, le rotor (11) présentant un guide de poinçon supérieur (13) pour poinçons supérieurs (14) de la presse à comprimés rotative (100) et un guide de poinçon inférieur (15) pour poinçons inférieurs (16) de la presse à comprimés rotative (100) ainsi qu'un disque porte-matrices (10) disposé entre les guides de poinçons (13, 15), les poinçons (14, 16) interagissant avec des cavités (12) du disque porte-matrices (10), comprenant en outre un dispositif de remplissage (22), à travers lequel du matériau en poudre devant être comprimé est versé dans les cavités (12) du disque porte-matrices (10), comprenant en outre au moins un dispositif de pressage supérieur et au moins un dispositif de pressage inférieur, lesquels interagissent avec les poinçons supérieurs (14) et avec les poinçons inférieurs (16) pendant le fonctionnement, pour le pressage du matériau en poudre dans les cavités (12) du disque porte-matrices (10), comprenant en outre un dispositif d'éjection (40), dans lequel les comprimés (44) produits dans les cavités (12) sont éjectés.

12. Procédé pour le transfert d'un capteur dans un boîtier (102) d'un dispositif de production (100) avec un agencement de capteur selon l'une des revendications 1 à 8, comprenant les étapes :
• des lignes d'alimentation et/ou de signal de capteur (78, 80) sont reliées à la partie de capteur (52) du capteur,
• le tuyau étanche (56) est fixé de façon étanche à la partie étanche (54) du capteur avec sa première extrémité (58) et de façon étanche au récipient étanche (62) avec sa deuxième extrémité (60),
• le capteur est placé dans le récipient étanche (62) avec le tuyau étanche (56),
• le récipient étanche (62) est fixé de façon étanche à l'ouverture d'accès (108) du boîtier (102) du dispositif de production (100) avec sa première extrémité,
• l'ouverture d'accès (108) du boîtier (102) du dispositif de production (100) est ouverte,
• le capteur est retiré du récipient étanche (62) à partir de l'intérieur du boîtier (102) et transféré à l'intérieur du boîtier (102).

13. Procédé pour le transfert d'un capteur hors d'un boîtier (102) d'un dispositif de production (100) avec un agencement de capteur selon l'une des revendications 1 à 8, comprenant les étapes :
• le capteur est transféré de l'intérieur du boîtier (102) dans le récipient étanche (62), à partir de l'intérieur du boîtier (102) du dispositif de production (100),
• l'ouverture d'accès (108) du boîtier (102) est fermée,
• le récipient étanche (62) est détaché de l'ouverture d'accès (108) du boîtier (102) avec le capteur et le capteur est retiré du récipient étanche (62).

14. Procédé pour le transfert d'un capteur hors d'un boîtier (102) d'un dispositif de production (100) avec un agencement de capteur selon au moins la revendication 7 , comprenant les étapes :
• le capteur est transféré de l'intérieur du boîtier (102) dans le récipient étanche (62), à partir de l'intérieur du boîtier (102) du dispositif de production (100),
• l'ouverture d'accès (108) du boîtier (102) est fermée,
• la deuxième extrémité du récipient étanche (62) est ouverte par l'ouverture du dispositif de fermeture,
• des lignes d'alimentation et/ou de signal de capteur (78, 80) sont détachées de la partie de capteur (52) par la deuxième extrémité du récipient étanche (62) et retirées du récipient étanche (62),
• le capteur est retiré du récipient étanche (62) par la deuxième extrémité du récipient étanche (62), ou le récipient étanche (62) est détaché de l'ouverture d'accès (108) du boîtier (102) avec le capteur, et le capteur est retiré du récipient étanche (62).

15. Procédé selon l'une des revendications 12 à 14, **caractérisé en ce que** l'intérieur du boîtier (102) est nettoyé avec un liquide de nettoyage avant le transfert du capteur dans le récipient étanche (62), et/ou **en ce que**, dans l'état avec capteur retiré du récipient étanche (62), le tuyau étanche (56) est coupé et en même temps fermé, de telle sorte que le capteur peut être détaché de la deuxième extrémité (60) du tuyau étanche (56) fixée sur le récipient étanche (62).
